# EUROPEAN PATENT SPECIFICATION

(11) **EP 4 307 925 B1**
(45) Date of publication and mention of the grant of the patent: **29.04.2026**
(21) Application number: 22708484.5
(22) Date of filing: 10.02.2022
(51) Int. Cl.: A23P 20/12, A47J 43/22, B07B 1/02

(54) **FLOURING UNIT WITH REMOVABLE SIEVE**
MEHLIEREINHEIT MIT ABNEHMBAREM SIEB
UNITÉ DE FARINAGE AVEC TAMIS AMOVIBLE

(30) Priority: 10.02.2021 IT 202100002939
(43) Date of publication of application: 24.01.2024
(73) Proprietor: 33 MEDIA SRL, 33082 Azzano Decimo (PN) (IT)
(72) Inventor: PLOZZER, Bruno, 33083 Chions (PN) (IT); BORTOLUSSI, Giuseppe, 33080 Zoppola (PN) (IT); BOCCALON, Dino, 33080 Porcia (PN) (IT)
(74) Representative: De Anna, Pier Luigi
(86) International application number: PCT/EP2022/053230
(87) International publication number: WO 2022/171735

(56) References cited:
- EP-A2- 1 159 908
- KR-A- 20200 128 814
- US-A- 5 575 848
- US-A1- 2009 184 031

## Description

The present invention is directed to a flouring or breading unit with removable sieve.

### FIELD OF THE INVENTION

The cooking of food by frying is performed with the use of boiling oils or fats. In order to limit the absorption of the frying oils and/or frying fats into the food and to make the cooking of fried food uniform, it is the norm to coat the food, before its immersion in the boiling oil or fat, with flour or breaded matter. The flouring or breading ensures a palatable result. Using this method, food will be cooked by conduction (when the food meets the sides of the pan) and by convection (due to the floating of the products in the cooking fat). The latter is the most important in frying as the hot fat distributes the heat evenly across the surface of the food, preventing it from sticking and accentuating the flavor. Frying can reach much higher temperatures than boiling, even close to 200°C, causing a tissue contraction reaction and a caramelization process, forming a crust that prevents the juices of the food from escaping.

Flouring or breading is done by covering and mixing the food to be floured or breaded with a generous amount of flour or breaded matter to cover the outer surface of the food in all its parts with flour and breaded matter.

Normally the food is placed on a baking container, preferably of stainless-steel material, of sufficient size to contain the food and the flour or breaded matter, the latter in quantities two or three times greater in volume than the volume of the food to be coated to ensure after mixing the food is uniformly coated with flour or breaded matter.

Once the stirring phase is complete, the excess flour or breaded matter must be removed. An excess of the flouring or breading element would change the characteristic flavor of the food to be coated in flour.

The flouring or breading matter is removed by manual separation of the breaded food from the flouring or breading matter, flour or breaded matter, either by visual selection or by the use of sieves which allow by a small mechanical action, such as gentle agitation of the sieve, to achieve this separation. If with the first method of selection the separation of the flouring or breading matter from the food is slow and can leave remains of food in the flour or bread, which would jeopardise the subsequent use of the remaining flour for a subsequent food breading, even of a different type, the use of sieves for the separation of the flouring or breading matter from the breaded matter involves the difficulty of retaining the flouring or breading waste during said separation in hygienically protected containers.

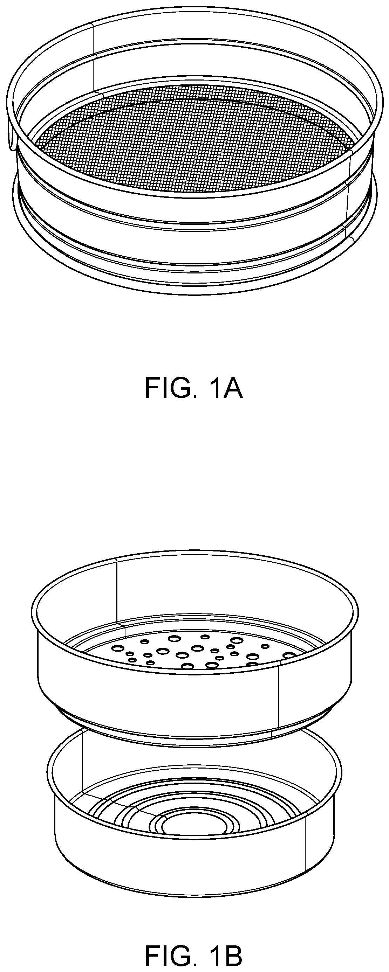

Fig. 1a shows a round stainless-steel flouring or breading unit with sieve, also called fish flouring or breading machine because it is used in the kitchen to flour fish, especially small fish for the preparation of mixed fried food.

During the phase of separation with sieves, the flouring or breading matter falls by gravity and spreads on the underlying surface.

The flouring or breading machine of fig. 1b partly solves this problem, an upper container with a perforated bottom or with a sieve fits on a lower container with a closed bottom. Flour and foodstuffs to be coated with flour are placed in the upper container and mixed. Excess flour is recovered in the lower container; in order to achieve a good level of flouring, this operation must be repeated several times; during the emptying of the flour collected in the lower container, part of it may be scattered on the worktable.

A collection container that is large in relation to the sieve separation area, larger by a factor of at least four, and the skill of the operator can limit the amount of matter that cannot be recycled as it falls outside the collection container. For obvious hygienic reasons, this flouring or breading matter which falls outside the collection container cannot be recycled, with a clear increase in costs, as it is polluted by bacteriological elements which can be found on the worktables where flouring or breading takes place in a professional kitchen.

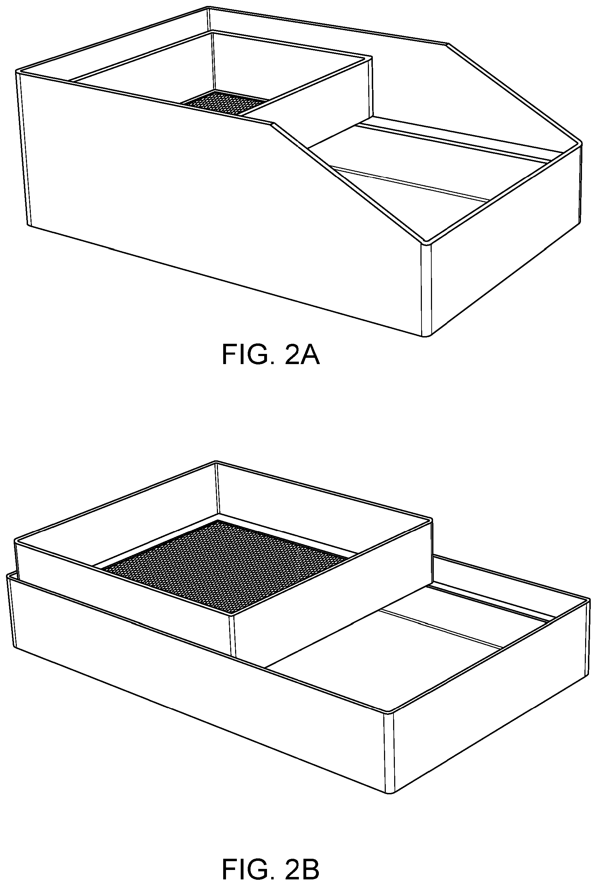

One way of solving this problem is with flouring or breading units according to fig. 2a and fig. 2b. The flouring or breading devices according to fig. 2a, normally made of stainless-steel, consist of a rectangular container with side walls on three sides which are very pronounced with respect to the fourth side of lower height, normally between 50% and 30% of the sides of higher height. A stainless-steel sieve is placed on rails inside the container.

The container has, on the two right and left sides, with respect to the side wall of lower height as described above, two protuberances placed at a height with respect to the bottom of the container equal to the height of the front wall. The sieve placed inside this container shall normally have a quadratic dimension with one side slightly smaller than the dimension of the opening side of the container. The dimension must be such that the sieve lies inside the container on these rails. The sieve-container assembly has the appearance of Fig. 2a.

The opening constituted by the container and sieve on the side of the lower side of said container allows the operator to put his hands inside the volume generated by the lower surface of the sieve and the inner surface of the container to recycle the flouring or breading matter that is not secured on the surface of the food to be breaded and that is collected in the container below.

In use, the breading/flouring matter is placed at the bottom of the container, the food to be breaded is placed within the sieve arranged in use inside the container and kept at a height H from the bottom of the container by rails located on the side surfaces relative to the shortest side of the container. The rails are located at a height H to keep the sieve suspended with respect to the inner surface of the container and to create with the front side of the container of a height lower than the three further sides an inlet for the operator's hands to easily reach the flouring or breading matter placed under the sieve and retrieve it for redistributing it over the food to be floured. Once the flouring or breading matter has been placed on top of the food to be floured, the operator only has to mix the food with the flouring or breading matter. The excess will fall to the bottom and be collected from the container. At this point, the operator decides whether to repeat the flouring or breading operation as described above, inserting his hands through the access opening, recovering the flouring or breading matter in the container's tray and returning it with his hands to the food, which has already been partially floured, in order to achieve the correct degree of flouring or breading by repeating these cycles.

The flouring or breading units according to figure 2b, also made of stainless-steel, are constituted by a container having a base of rectangular shape with side walls, unlike the one 2a, of equal heights on the four sides. A stainless-steel sieve is placed on rails inside this container.

The sieve placed inside this container shall normally have a quadratic dimension with one side slightly smaller than the dimension of the opening side of the vessel. The size must be such that the sieve rests inside the container on these rails. The sieve-container assembly has the appearance of Fig. 2b.

The opening constituted by the container and sieve on the side of the lower side of said container allows the operator to put his hands inside the volume generated by the lower surface of the sieve and the inner surface of the container to recycle the flouring or breading matter that has not fixed on the surface of the food to be breaded and that has collected in the container below.

In use, the breading/flouring matter is placed at the bottom of the container, the food to be breaded is placed within the sieve arranged in use inside the container and kept at a height H from the bottom of the container by rails located on the side surfaces relative to the shortest side of the container. The rails are located at a height H to keep the sieve suspended with respect to the inner surface of the container and to create with the front side of the container of a height lower than the three further sides an inlet for the operator's hands to easily reach the flouring or breading matter placed under the sieve and retrieve it for redistributing it over the food to be floured. Once the flouring or breading matter has been placed on top of the food to be floured, the operator only has to mix the food with the flouring or breading matter. The excess will fall to the bottom and be collected from the container. At this point, the operator will decide whether to repeat the flouring or breading operation as described above by inserting his hands through the access opening, retrieving the flouring or breading matter in the container tray and returning it with his hands to the already partially floured food, in order to achieve correct flouring or breading by repeating these cycles. Although the last two types of flouring or breading units described above are already on the market and represent a solution to the collection without dispersion of the flouring or breading matter, further problems arise mainly due to the fact that the first stirring of the food with the flouring or breading matter takes place by mixing the food and the flouring or breading matter on the sieve. This stirring operation on the sieve causes the breading/flouring matter to fall by gravity into the collection container below before the food is completely coated. To solve this problem of insufficient breading, the operator must intervene to obtain proper flouring or breading by recycling the flouring or breading matter that has collected in the container below. The operator must therefore place his hands in the opening formed by the collection container and the sieve, collect the flouring or breading matter with his hands, place it back on the partially breaded food and stir the food and the breaded matter together. The flouring or breading matter will partly stick on the food and partly fall back into the container below. In general, this operation of recycling the breaded matter must be repeated two or three times to ensure perfect flouring or breading of the food by the breading/flouring matter with a minimum use of breading/flouring matter, an operation which is essential for the perfect cooking of breaded food with vegetable oils or animal fats. US2009/184031 discloses a sieve which includes a rectangular reservoir that has a screen bottom. The sieve also includes a first side flange that is positioned on one side of the reservoir and a second side flange that is positioned on the opposite side of the reservoir. The reservoir is adapted to fit within a container where the two side flanges extend over and rest on opposite sides of the container. The reservoir is movable within the container, whereby, when the powdered substance is inserted into the sieve, the sieve sifts the reusable powdered substance from the non-reusable powdered substance.

US5575848 discloses an apparatus for applying coatings to food. The apparatus including two hollow generally cylindrical containers open at one end and closed at the other end, and a generally hollow cylindrical coupling member open at both ends, each end being adapted to receive the open end of each of said cylindrical containers, the coupling member having a perforated platform therein which divides the coupling member into two cylindrical sections. The method including placing batter in one of the two containers, placing food in one of the two containers, connecting the coupling member to the container having batter therein, connecting the other container to the coupling member, and shaking the assembled coupling member and two containers to cause batter to coat the food.

KR20200128814 relates to a slidable tray and, more specifically, to a slidable tray which configures a tray used to separate foreign substances mixed with various agricultural products at homes, businesses or the like to be slidable to easily remove the foreign substances, thereby easily and efficiently separating the foreign substances and shortening working time. EP1159908 discloses a tool for food flouring or breading made up of a rectangular box with airtight lid, internally provided with a horizontal grid that covers the entire box section at a certain height from the bottom.

### SUMMARY

A system for flouring or breading food and a method for flouring or breading food according to the invention allows to solve these technical problems.

The invention is set out in the appended set of claims.

According to a main embodiment, the invention comprises a system for flouring or breading food comprising at least two containers, a first container (V1) and second containers (V2) consisting of a quadrilateral bottom (F') and (F") having perimeters (P') and (P") and walls on the four sides of height (h') and (h"). Said bottom having dimensions such that said first container (V1) having perimeter (P') is contained in said second container (V2) having perimeter (P') and that said perimeter (P') of said first container (V1) is smaller than said perimeter (P") of said second container (V2). Said larger second container (V2) having on its side of greater dimensions (a") a rim or a edge or a side edge or a lateral side edge (4) with a rise (8) placed on the upper rim of height (h") cantilevered either inwards or outwards and said rim (4) forms a base for the base of smaller side of said first container (V1). Said first container (V1) has the bottom constituted, at least partially, by a sieve (3) and said sieve (3) bottom (F') is in direct contact with the bottom (F") of the container (V2), said sieve (3) is of suitable dimensions to allow, in use, the separation of the exceeding floury matter from the floured or breaded food by placing said first container (V1) inside said second container (V2), whereby said bottom (F') of said first container (V1) is in direct contact with said bottom (F") of said second container (V2), placing the food to be coated in flour or breaded matter inside said container (V1), pouring flour or breading material over the food to be breaded in said first container (V1) in an amount proportionate to the food to be breaded or floured; manual stirring of the food and flour, maintaining the configuration of said first container (V1) inside said second container (V2); lifting and 90° rotation of said first container (V1) containing the pre-breaded food; positioning of said first container (V1) on said side rim (4) provided with said rise (8) of said container V2 so that the bottom F' provided with a sieve (3) is raised by a distance h" from the bottom F" of the (V2) container, stirring of the pre-floured or breaded food from the previous stage, excess flour or breaded matter falls through the sieve (3) into the bottom F' of container (V2) and separating the floured or breaded food and recirculating the excess flour or breaded matter collected on the bottom F' of container (V2).

According to a further preferred embodiment said quadrilateral bottom of said containers has a rectangular shape with dimensions of the sides of the container V1 of perimeter P' lower than a' and b', and of the sides of the second container V2 of perimeter P" higher than a' and b". The dimensions of said sides of each are such that a' < a" and b' < b", and the ratios a'/a" and b'/b" are between 90 and 50%. Preferably the dimensions of side a' is between 220 and 280 mm and the dimensions of side a" is between 290 and 400 mm. More preferably the walls in the four sides are of height h" > h' and the sieve placed on the bottom F' of the container V1 covers the surface of the bottom F' between 95% and 100%.

According to a further preferred embodiment, the second container V2 of larger size has on its larger side A" a raised rim or edge, said rim or edge can be cantilevered either inwardly or outwardly and constitutes a support base of the base of the container V1 on its smaller side B'.

According to a preferred embodiment method in the system according to the invention, the container V1 is covered by a third container V3 of similar dimensions. Said third container V3 fits on the upper rim or edge of the container V1 and has a bottom formed by a sieve having a size 30% larger than the size of the sieve of the container V1. Preferably, the size of said sieve of the third container V3 is between 60 - 120 % of the size of the sieve of the container V1.

Further preferred ways of implementing the system according to the invention are claimed in the appended claims 2-8.

The invention is also directed to a method for flouring or breading a food using a system according to the invention. According to this method, there is provided positioning of a first container (V1) within a second container (V2), whereby the bottom (F') of the first container (V1) is in direct contact with the bottom (F") of the second container (V2); placing the food to be coated in flour or breaded matter inside said container (V1); pouring flour or breading material over the food to be breaded inside said first container (V1) in an amount proportionate to the food to be breaded or coated; manual stirring of the food and flour, maintaining the configuration of said first container (V1) inside said second container (V2); lifting and 90° rotation of said first container (V1) containing the pre-breaded food; positioning of said container (V1) on the rim or side edge (4) provided with a rise (8) of second container (V2) so that said bottom F' of said first container (V1) provided with a sieve (3) is raised by a distance h" from said bottom F" of said second container (V2); stirring of the pre-floured or breaded food from the previous stage, excess flour or breaded matter falls through the sieve (3) into the bottom F' of second container (V2); and separating the flour-coated or breaded food and recirculation of the excess flour or breaded matter collected at the bottom F" of said second container (V2).

According to a preferred embodiment the method for flouring or breading a food using a system according to the invention in which the first container V1 is covered by a third container V3. The method comprises positioning the first and third containers assembly V1+V3 inside the second container V2, arranging the food to be coated inside the third container V3 placed superiorly to the container V1, pouring the flour or breading matter over the food to be coated inside the third container V3 in an amount proportionate to the food to be coated or breaded, and intimately stirring the food and flour or breaded matter while maintaining the configuration of the first and third containers assembly V1+V3 inside the second container V2. Again according to this preferred method of implementation, the method envisages lifting and rotating the first and third containers assembly V1-V3 containing the pre-breaded food by 90°, positioning the first and third containers assembly V1+V3 on the rim or side edge (4) provided with a riser (8) of the second container V2 so that the bottom F' provided with a sieve (3) is raised by a distance h" from the bottom F" of the second container V2, mixing in the third container V3 of the pre-floured food of the previous stage, excess flour or breaded matter falling through the sieve of the third container V3 into the first container V1; the separation of the floured or breaded food placed inside the third container V3; and finally the stirring of the flour or breaded matter fallen in the stage "o" inside the first container V1, and the recirculation of the excess flour or breaded matter collected at the bottom F" of the second container V2 through the sieve (3) of the first container V1 towards a new flouring or breading process according to the previous stages and the discarding of the remaining flour or breading matter left inside the first container V1.

Further preferred embodiments of the method according to the invention are claimed in the appended claims 10 - 16.

### BRIEF DESCRIPTION OF THE DRAWINGS

Figure 1a is an isometric view of a stainless-steel fish flouring or breading unit and stainless-steel mesh sieve according to the prior art;
Figure 1b is an isometric view of a stainless-steel fish flouring or breading unit with a stainless-steel perimeter interlocking lower catch container according to the prior art;
Figure 2a is an isometric view of a flouring or breading unit with square section with interlocking collecting base and of rectangular section in stainless-steel according to the prior art;
Figure 2b is an isometric view of a flouring or breading unit having a square cross-section with an interlocking collecting base and a stainless-steel rectangular cross-section according to the prior art and similar to that shown in Fig. 2a;
Figure 3a is an isometric view of a flouring or breading unit and respective collection base both having a rectangular cross-section in stainless-steel according to the invention, the flouring or breading unit being positioned transversely with respect to the collection base and resting on supports raised with respect to the bottom of the collection base;
Figure 3b is an isometric view of a flouring or breading unit and respective collection base both having a rectangular cross-section in stainless-steel according to the invention, the flouring or breading unit base is placed on the bottom of the first container V1;
Figure 4 is a plan view of the flouring or breading first container V1, and two views in section C-C perpendicular to the longest side and section B-B perpendicular to the shortest side.;
Figure 5 is a plan view of the catch second container V2, and two views in section D-D perpendicular to the longest side and section A-A perpendicular to the shortest side;

### DETAILED DESCRIPTION

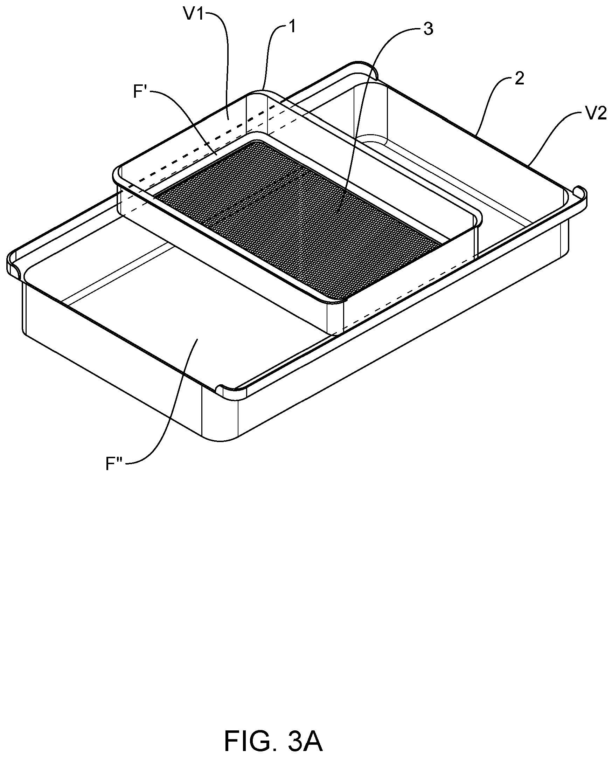

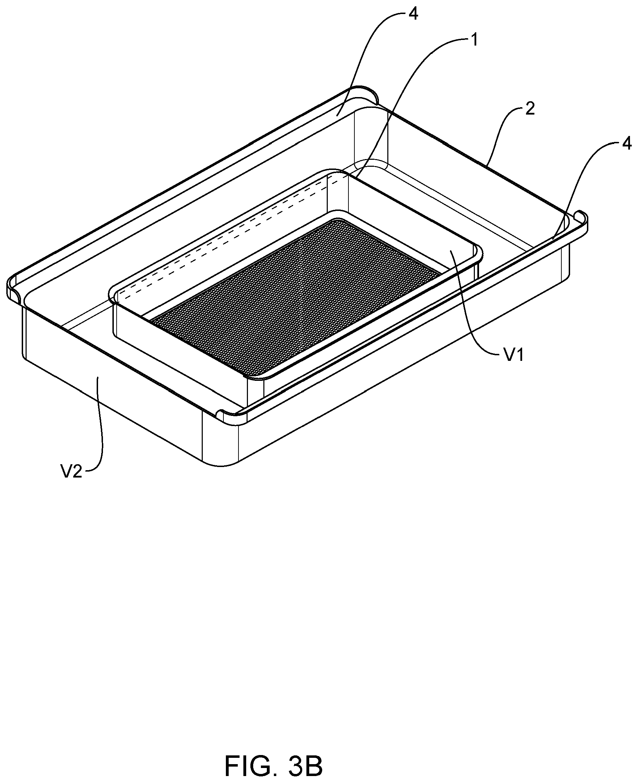

Figures 3a and 3b show the system for flouring or breading food according to the invention comprising two receptacles (1) and (2) or first and second containers V1 and V2 respectively.

According to a preferred embodiment, the system according to the invention comprises a first container V1 covered by a further third container V3 (not shown in the figures) of similar dimensions to the first container V1, said third container V3 being embedded in the upper rim or edge of the first container V1.

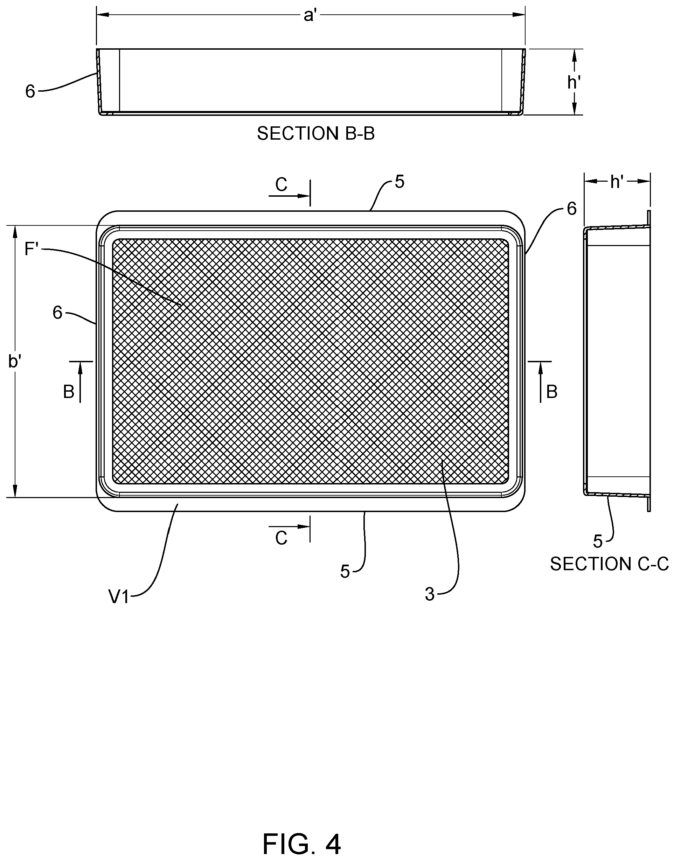

Figure 4 shows orthogonal views of the vessel (1) consisting of a first container V1 with a quadrilateral bottom F' and walls (5) and (6), possibly of equal heights h' and made of stainless-steel, although the use of other materials such as wood, plastic and metals normally used in the kitchen is not excluded. The bottom F' of the first container V1 consists at least partially of a sieve (3) of a suitable size to allow in use the separation of the excess floury matter from the floured food.

Preferably the sieve (3) covers the whole surface of the bottom F'. The shape of the container is quadrilateral where a' is the length of the two larger sides and b' is the length of the two smaller sides. Preferably the size of said side a' is between 220 and 280 mm and the size of said side a" is between 290 and 400 mm.

According to the preferred embodiment in which the first container V1 is covered by a further third container V3 (not shown in the figures) of similar dimensions to the first container V1 and which is embedded in the upper rim or edge of the first container V1, said container V3 has a bottom formed by a sieve having dimensions 30% larger than the dimensions of the sieve of the first container V1; preferably the dimensions of said sieve of the third container V3 are between 60 - 120 % of the dimensions of the sieve of the first container V1.

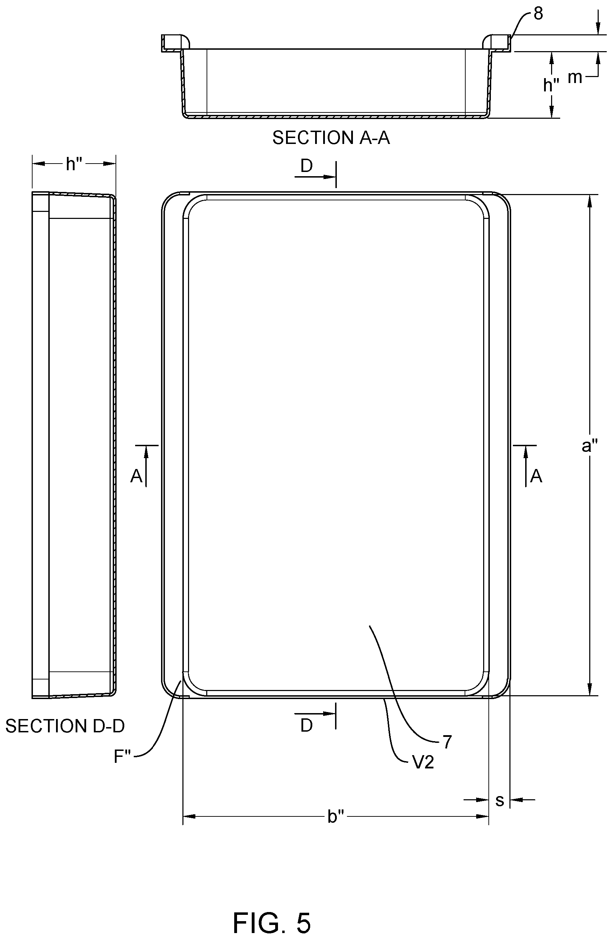

Figure 5 shows orthogonal views of the vessel (2) consisting of a second container V2 which is formed by a quadrilateral bottom F" and walls, possibly of equal heights h" and made of stainless-steel, although the use of other materials such as wood, plastic and metals normally used in cooking is not excluded. The heights of the walls are similar to or slightly higher than the height of the vessel (1), although the opposite is not excluded. The bottom F" of said second container V2 consists of a quadrangular surface (7) welded or continuous to the walls of the container to allow in use the collection of excess flouring or breading matter from the floured food. The shape of the container is quadrilateral where a" is the length of the two longer sides and b" is the length of the two shorter sides.

The second container V2, which is larger than the first container V1, or the set of the first container V1 with the third container V3 fitted on the upper rim or edge, - has on its larger side a" a rim (4) with a rise or raised edge (8), which can be cantilevered either inwards or outwards and forms a base for the base of the first container V1, or of the set first and third containers V1+V3, on its smaller side b'. Preferably, the overhang of said edge has a dimension S is outward and the dimension of the larger side of the first container V1 a' is such that b' < a' < (b" +2S) and length c" = a". In this way the second container V2 constitutes an effective low point to the first container V1, or of the whole first and second containers V1+V2, when the latter is arranged orthogonally according to its length on the second container V2.

The rise or elevation (8) of the rim or edge (4) ensures that when the two first containers V1, or of the set first and second containers V1+V2, and the second container V2 are arranged orthogonally to each other, the first container V1, or of the set first and second containers V1+V2, is kept raised by the rims or edges (4) with respect to the bottom (7) of the second container V2 and is prevented from moving sideways perpendicular to the axis of the container 2. The ratio between the dimensions of the sides a' and b', and a" and b" of the respective first and second containers V1 and V2 allows the first container V1 to be contained inside the second container V2 and to have the bottom F' equipped with sieve (3) in direct contact with the bottom F" of the second container V2. According to a preferred embodiment of the present invention, the system is constituted by two first and second containers (V1 and V2) with a quadrilateral bottom F' and F" with perimeter P' = (2*a' + 2*b') and P"= (2*a" + 2*b") and with walls in the four sides of height h' and h", according to a preferred embodiment h' < h". Said bottom has dimensions such that said first container V1 of lower perimeter P' is contained in the second container V2 of upper perimeter P", said first container V1 having a bottom constituted at least partially by a sieve (3) of suitable dimensions to allow in use the separation of the excess floury matter from the floured food.

Preferably, said quadrilateral bottoms F' and F" have a rectangular shape with dimensions of the sides of the first container V1 of perimeter P' less than a' and b', and of the sides of the second container V2 of perimeter P" greater than a' and b".

In particular, the dimensions of said sides are such that a' < a" and b' < b", and the ratios a'/a" and b'/b" are between 90% and 50%.

The system according to the invention has the larger-sized second container V2 having on its larger-sized side a" an rim or edge (4) with a rise or an overhang (8), said rim or edge can be cantilevered either inwardly or outwardly and forms a base for supporting the base of the first container V1 on its smaller-sized side b'. The overhang of said rim or edge of dimension S is outwards and the dimension of the larger side of the smaller container V1 a' is such that b" < a' < (b" +2S).

In the following, we will illustrate the method of using the flouring or breading unit and the obvious advantages that this type of flouring or breading unit has over flouring or breading units known in the art, as well as the advantages inherent in using a system according to the invention to properly flour foods with a minimum expenditure of flouring or breading matter.

Let us refer to figure 3b. In this figure, the first container V1 is shown, which is provided with a sieve (3) placed on the bottom F'. The sieve (3) covers the surface of the bottom F' almost 100%.

The first container (V1) is placed inside the bottom F" of the second container V2 because the dimensions of the first container V1 are smaller than the dimensions of the second container V2. The sieve (3) on the bottom F' is in direct contact with the bottom F" of the second container V2.

The food to be coated with flour or breaded matter is placed inside the first container V1, flour or breading matter is poured over the food to be coated inside the first container V1 in an amount proportionate to the food to be coated or floured. The food and flour or breaded matter are mixed intimately maintaining this configuration of said first and second containers V1 and V2. If it is judged that a further quantity of flour or breaded matter needs to be added this can be done at a later time followed by further mixing.

When the ideal flouring or breading level has been reached, lift the first container V1containing the pre-breaded food and turn it by 90°, placing the first container V1 on the side rim or edge (4) of the second container V2, which is provided with a rise (8). The bottom F' with the sieve (3) will be raised by a distance h" from the bottom F" of the second container V2.

The next stage involves the remixing of the pre-floured or breaded food from the previous stage, the excess flour or breaded matter falling through the sieve (3) into the bottom F' of the second container V2.

At this point the food has been optimally floured or breaded, the excess flour or breaded matter falling to the bottom F" of the second container V2.

According to a preferred embodiment method for flouring or breading a food using a system according to the invention in which the first container V1 is covered by a third container V3 and comprises placing the first and third container assembly V1+V3 inside the second container V2, arranging the food to be floured or breaded inside the third container V3 placed above the first container V1 and pouring the flour or breading material over the food to be breaded inside the third container V3 in an amount proportionate to the food to be breaded or floured. Next, the operator intimately mixes the food and flour or breaded matter in the upper third container V3, maintaining the configuration of the first and third containers assembly V1+V3 inside the second container V2. The operator then lifts and rotates the first and third containers assembly V1+V3 containing the preblended food by 90° and positions the first and third containers assembly V1+V3 on the side rim or edge (4) of the second container V2, fitted with a rise (8), so that the bottom F' of the first container V1 fitted with the sieve (3) is raised by a distance h" from the bottom F" of the second container V2. At this point the operator performs the operation of mixing in third container V3 the pre-floured or breaded food of the previous stage, flour or breaded matter in excess fall through the sieve of the third container V3 into the first container V1. The floured or breaded food placed in the third container V3 is now ready for cooking according to the chosen cooking system; therefore, the third container V3 is detached from the first container V1, which maintains its position on the second container V2, and the floured or breaded food started to cook. The flouring or breading material has collected in the first container V1, partly in lumps. These lumps are not suitable for a subsequent flouring or breading operation and must therefore be separated and discarded from the part still usable for a subsequent flouring or breading cycle. This process of separating the flouring or breading matter from the lumps formed in the previous stage of flouring or breading is done by stirring the flour or breading matter which fell in the previous stage inside the container V1, and recirculating the excess flour or breading matter collected at the bottom F" of the second container V2 through the sieve (3) of the first container V1 to a new flouring or breading process according to the previous stages.

The remainder consisting of flour or breading material in medium to large lumps remaining in first container V1 after the stage is definitively eliminated.

In this way, only the part of the flour or breading material that formed into non-recyclable lumps in the previous stages of flouring or breading is recycled.

The breaded food can be sent to cooking, while the excess flour, which has not been contaminated by the operator, who wears sanitary gloves, and by dispersion on the worktable, can be reused for the next flouring or breading of the same type of food for an indefinite number of flouring or breading in the same day.

The system according to the invention solves the problem of flouring or breading a food in moderate quantities by achieving an optimal level of flouring or breading for its cooking, avoiding dispersion of flour or breaded matter in the areas surrounding the flouring or breading area, and allowing 100% recycling of the flour or breaded matter not adhered to the food and not clotted during the flouring.

A number of embodiments of the invention defined by the following claims have been described. Nevertheless, it will be understood that various modifications can be made to the described forms of embodiment without departing from the scope of the claimed invention. Accordingly, other forms of embodiments fall within the scope of the following claims.

## Claims

1. A system for flouring or breading food comprising at least two containers, a first container (V1) and a second container (V2) each consisting of a quadrilateral bottom (F') and (F"),having perimeters (P') and (P") and walls on the four sides of height (h') and (h"), said bottom having dimensions such that said first container (V1) having perimeter (P') is contained in said second container (V2) having perimeter (P") and that said perimeter (P') of said first container (V1) is smaller than said perimeter (P") of said second container (V2), said larger second container (V2) having on its side of greater dimensions (a") a rim (4) with a rise (8) placed on the upper rim of height (h") cantilevered either inwards or outwards and said rim (4) forms a base for the base of a smaller side (b') of said first container (V1), said first container (V1) has the bottom constituted, at least partially, by a sieve (3) and said sieve (3) bottom (F') of the first container (V1) is in direct contact with the bottom (F") of the second container (V2), said sieve (3) is of suitable dimensions to allow, in use, the separation of the exceeding floury matter from the floured or breaded food by:
a. placing said first container (V1) inside said second container (V2), whereby said bottom (F') of said first container (V1) is in direct contact with said bottom (F") of said second container (V2),
b. placing the food to be coated in flour or breaded matter inside said container (V1),
c. pouring flour or breading material over the food to be breaded in said first container (V1) in an amount proportionate to the food to be breaded or floured;
d. manual stirring of the food and flour, maintaining the configuration of said first container (V1) inside said second container (V2);
e. lifting and rotating of 90° said first container (V1) containing the pre-breaded or pre-floured food;
f. positioning of said first container (V1) on said rim (4) provided with said rise (8) of said second container (V2) so that the bottom F' of said first container (V1) provided with said sieve (3) is raised by a distance h" from the bottom F" of said second container (V2),
g. stirring of the pre-floured or pre-breaded food from the previous stage, excess flour or breaded matter falls through said sieve (3) into the bottom F" of said second container (V2);
h. separating the floured or breaded food and recirculating the excess flour or breaded matter collected on the bottom F" of said second container (V2).

2. System according to claim 1, wherein said quadrilateral bottoms have:
a. rectangular shape with dimensions a' and b' of the sides of said first container (V1) of perimeter P' and with dimensions a" and b" of the sides of said second container (V2) of perimeter P",
b. the dimensions of said sides are such that a' < a" and b' < b", and
c. the ratios a'/a" and b'/b" are between 90 and 50%;

3. System according to claim 2, wherein the dimensions of said side a' are between 220 and 280 mm and the dimensions of said side b' are between 290 and 400 mm.

4. System according to claims 2 and 3, wherein walls on the four sides are of height h" > h' and the sieve (3) placed on the bottom F' of said first container (V1) covers the surface of the bottom F' between 95% and 100%.

5. System according to any one of the preceding claims, wherein said rim (4) with a rise (8) placed on said upper rim of height h" on the larger side a" of said larger-sized second container (V2) is cantilevered of dimension S both inwardly and outwardly and forms the base of the base of said first container (V1) on its side of smaller size b' and said rise (8) is external to the rim.

6. System according to claim 5, wherein the overhang of said rim (4) of dimension S of said second container (V2) is outwards and the dimension of the largest side of said first container (V1) a' is such that b' < a' < (b" +2S); preferably the system is provided with a lid closing said second container (V2) of dimensions between the overhangs on the largest sides a" and of width c' such that b" < c' < (b "+2S) and length c" = a".

7. System according to any of the preceding claims, wherein said first container (V1) is covered by a third container of similar dimensions, said third container being embedded in the upper edge of said first container (V1) and having a bottom comprising a sieve having dimensions 30% greater than the dimensions of the sieve of said first container (V1).

8. System according to claim 7, wherein the dimensions of said sieve of said third container are between 60 - 120 % of the dimensions of the sieve of said first container (V1).

9. A method for flouring or breading a food using a system claimed according to any of claims 1 to 4, comprising:
a. placement of a first container (V1) within a second container (V2), whereby said bottom (F') of said first container (V1) is in direct contact with said bottom (F") of said second container (V2);
b. placing the food to be coated in flour or breaded matter inside said first container (V1);
c. pouring flour or breading material over the food to be breaded inside said first container (V1) in an amount proportionate to the food to be breaded or coated;
d. manual stirring of the food and flour, maintaining the configuration of said first container (V1) inside said second container (V2);
e. lifting and rotating of 90° said first container (V1) containing the pre-breaded or pre-floured food;
f. positioning of said first container (V1) on the rim (4) provided with a rise (8) of said second container (V2) so that said bottom F' of said first container (V1) provided with a sieve (3) is raised by a distance h" from said bottom F" of said second container (V2);
g. stirring of the pre-floured or pre-breaded food from the previous stage, excess flour or breaded matter falls through the sieve (3) into the bottom F" of said second container (V2);
h. separating the flour-coated or breaded food and recirculating the excess flour or breaded matter collected at the bottom F" of said second container (V2).

10. Method according to claim 9, wherein said first container (V1) is covered by a third container according to claim 7, and comprising:
a. placement of the assembly of said first and third containers inside said second container (V2),
b. arrangement of the food to be floured or breaded inside said third container placed above said first container (V1),
c. pouring the flour or breading material over the food to be coated inside said third container in an amount proportionate to the food to be floured or breaded;
d. manual stirring of the food and flour, maintaining the configuration of said first and third containers assembly inside the second container(V2);
e. lifting and rotating of 90° said first and third containers assembly containing the pre-breaded or pre-floured food;
f. positioning of said first and third containers assembly on said rim (4) provided with a rise (8) of said second container (V2) so that the bottom F' provided with a sieve (3) is raised by a distance h" from the bottom F" of said second container (V2),
g. mixing in said third container of the pre-floured or pre-breaded food from the previous stage, excess flour or breaded matter falls through the sieve of said third container into said first container (V1);
h. separation of the floured or breaded foodstuff placed inside said third container ;
i. mixing of the flour or breading material that has fallen in stage 'g' inside said first container (V1), and recirculation of the excess flour or breading material collected at the bottom F' of said second container (V2) through the sieve (3) of said first container (V1) to a new flouring or breading process according to the previous stages;
j. discarding any remaining flour or breading material remaining in said first container (V1) after stage 'g'.

11. Method according to claim 9, wherein in case the operator judges that a further amount of flour or breading material has to be added this can be done after stage d.) respectively by repeating stages c) and d) for one or more times until optimal flouring or breading is achieved.

12. Method according to claim 10, wherein in case the operator judges that a further amount of flour or breading material has to be added this can be done after stage i.) respectively by repeating stages c.) and d.) for one or more times until optimal flouring or breading is achieved.

13. Method according to claim 9, wherein in case the operator judges at the end of respectively stage g) that a further amount of flour or breaded matter has to be added this can be done respectively by repeating stages c) to g) for one or more times until optimal flouring or breading is reached by recycling partly the flour or breaded matter collected on said second container (V2).

14. Method according to claim 10, wherein in case the operator judges at the end of respectively stage g) that a further amount of flour or breaded matter has to be added this can be done respectively by repeating stages c) to g) for one or more times until optimal flouring or breading is reached by recycling partly the flour or breaded matter collected on said second container (V2).

15. Method according to any one of claims 9, 11, or 13, wherein the flour or breaded matter collected at the bottom against the short side of said second container (V2) and said first container (V1), or said first and third containers assembly, is moved to the part of said second container (V2) left free of flour or breaded matter for further use.

16. Method according to any one of claims 10, 12, or 14, wherein the flour or breaded matter collected at the bottom against the short side of said second container (V2) and said assembly of first container (V1) and third containers, is moved to the part of said second container (V2) left free of flour or breaded matter for further use.

## Patentansprüche

1. Ein System zum Bemehlen oder Panieren von Lebensmitteln, bestehend aus mindestens zwei Behältern, einem ersten Behälter (V1) und einem zweiten Behälter (V2), die jeweils aus einem viereckigen Boden (F') und (F") mit den Umfängen (P') und (P") sowie aus Wänden mit den Höhen (h') und (h") an den vier Seiten bestehen, der genannte Boden ist so dimensioniert, dass der genannte erste Behälter (V1) mit dem Umfang (P') vollständig in dem genannten zweiten Behälter (V2) mit dem Umfang (P") enthalten ist und dass der genannte Umfang (P') des genannten ersten Behälters (V1) kleiner ist als der genannte Umfang (P") des genannten zweiten Behälters (V2), der genannte größere zweite Behälter (V2) weist an der Seite mit den größeren Abmessungen (a") einen Rand (4) mit einer Erhöhung (8) auf, die auf dem oberen Rand mit der Höhe (h") aufliegt und entweder nach innen oder außen auskragt und der genannte Rand (4) bildet eine Auflage für die Auflage einer kürzeren Seite (b') des genannten ersten Behälters (V1), der Boden des genannten ersten Behälters (V1) besteht zumindest teilweise aus einem Sieb (3) und der Boden (F') des genannten Siebs (3) des ersten Behälters (V1) steht in direktem Kontakt mit dem Boden (F") des zweiten Behälters (V2), wobei das genannte Sieb (3) geeignete Abmessungen aufweist, um im Gebrauch die Trennung des überschüssigen Mehls vom bemehlten oder panierten Lebensmittel zu ermöglichen, indem:
a. der genannte erste Behälter (V1) in den genannten zweiten Behälter (V2) eingesetzt wird, wobei der genannte Boden (F') des genannten ersten Behälters (V1) in direktem Kontakt mit dem genannten Boden (F") des genannten zweiten Behälters (V2) steht;
b. das zu bemehlende oder zu panierende Lebensmittel in den genannten Behälter (V1) eingesetzt wird;
c. das zu panierende Lebensmittel in dem genannten ersten Behälter (V1) in einer dem Volumen des zu bemehlenden oder zu panierenden Lebensmittels entsprechenden Menge mit Mehl oder Paniermehl überschüttet wird;
d. Lebensmittel und Mehl von Hand geschüttelt werden, wobei die Anordnung des genannten ersten Behälters (V1) im genannten zweiten Behälter (V2) beibehalten wird;
e. der genannte ersten Behälter (V1), der das vorpanierte oder vorbemehlte Lebensmittelt enthält, angehoben und um 90° gedreht wird;
f. der genannte erste Behälter (V1) auf dem mit der genannten Erhöhung (8) versehenen genannten Rand (4) des genannten zweiten Behälters (V2) angeordnet wird, sodass der Boden F' des genannten ersten Behälters (V1), der mit dem genannten Sieb (3) versehen ist, um den Abstand h" vom Boden F" des genannten zweiten Behälters (V2) angehoben ist;
g. das vorbemehlte oder vorpanierte Lebensmittel aus dem vorherigen Schritt geschüttelt wird, sodass das überschüssige Mehl oder Paniermehl durch das genannte Sieb (3) in den Boden F" des genannten zweiten Behälters (V2) fällt;
h. das bemehlte oder panierte Lebensmittel abgetrennt und das überschüssige Mehl- oder Paniermehl, das sich am Boden F" des genannten zweiten Behälters (V2) angesammelt hat, rückgeführt wird.

2. System nach Anspruch 1, wobei die genannten viereckigen Böden folgende Merkmale aufweisen:
a. rechteckige Form mit den Seitenlängen a' und b' des genannten ersten Behälters (V1) mit dem Umfang P' und den Seitenlängen a" und b" des genannten zweiten Behälters (V2) mit dem Umfang P";
b. die Abmessungen der genannten Seiten sind so gewählt, dass a' < a" und b' < b", und
c. die Verhältnisse a'/a" und b'/b" liegen zwischen 90 und 50 %.

3. System nach Anspruch 2, wobei die Abmessungen der genannten Seite a' zwischen 220 und 280 mm und die Abmessungen der genannten Seite b' zwischen 290 und 400 mm liegen.

4. System nach den Ansprüchen 2 und 3, wobei die Wände an den vier Seiten eine Höhe h" > h' aufweisen und das auf dem Boden F' des genannten ersten Behälters (V1) angebrachte Sieb (3) die Oberfläche des Bodens F' zu 95 bis 100 % bedeckt.

5. System nach einem der vorhergehenden Ansprüche, wobei der genannte Rand (4) mit Erhöhung (8), die auf dem genannten oberen Rand der Höhe h" an der längeren Seite a" des genannten größeren zweiten Behälters (V2) angeordnet ist, mit der Abmessung S nach innen und außen auskragend ist und auf der kürzeren Seite b' die Auflage der Auflage des genannten ersten Behälters (V1) bildet, wobei die genannte Erhöhung (8) außerhalb des Randes liegt.

6. System nach Anspruch 5, wobei der Überhang des genannten Randes (4) mit der Abmessung S des genannten zweiten Behälters (V2) nach außen gerichtet ist und die Abmessung der längsten Seite des genannten ersten Behälters (V1) a' so beschaffen ist, dass b' < a' < (b" + 2S) gilt; vorzugsweise ist das System mit einem Deckel versehen, der den genannten zweiten Behälter (V2) verschließt, mit Abmessungen zwischen den Überhängen an den längsten Seiten a" und einer Breite c', sodass Folgendes gilt: b" < c' < (b" + 2S) und Länge c" = a".

7. System nach einem der vorhergehenden Ansprüche, wobei der genannte erste Behälter (V1) von einem dritten Behälter ähnlicher Abmessungen bedeckt ist, wobei der genannte dritte Behälter in den oberen Rand des genannten ersten Behälters (V1) eingebettet ist und einen Boden mit Sieb aufweist, dessen Abmessungen 30 % größer sind als die Abmessungen des Siebs des genannten ersten Behälters (V1).

8. System nach Anspruch 7, wobei die Abmessungen des genannten Siebs des genannten dritten Behälters zwischen 60 und 120 % der Abmessungen des Siebs des genannten ersten Behälters (V1) liegen.

9. Ein Verfahren zum Bemehlen oder Panieren eines Lebensmittels unter Verwendung eines Systems nach einem der Ansprüche 1 bis 4, das folgendes umfasst:
a. Einsetzen eines ersten Behälters (V1) in einen zweiten Behälter (V2), wobei der genannte Boden (F') des genannten ersten Behälters (V1) in direktem Kontakt mit dem genannten Boden (F") des genannten zweiten Behälters (V2) steht;
b. Einlegen des zu bemehlenden oder zu panierenden Lebensmittels in den genannten ersten Behälter (V1);
c. Überschütten des zu panierenden Lebensmittels im genannten ersten Behälter (V1) mit Mehl oder Paniermehl in einer dem Volumen des zu bemehlenden oder zu panierenden Lebensmittels entsprechenden Menge;
d. manuelles Schütteln von Lebensmittel und Mehl unter Beibehaltung der Anordnung des genannten ersten Behälters (V1) im genannten zweiten Behälter (V2);
e. Anheben und Drehen des genannten ersten Behälters (V1), der das vorpanierte oder vorbemehlte Lebensmittel enthält, um 90°;
f. Anordnen des genannten ersten Behälters (V1) auf dem mit einer Erhöhung (8) versehenen Rand (4) des genannten zweiten Behälters (V2), sodass der mit einem Sieb (3) versehene genannte Boden F' des genannten ersten Behälters (V1) um den Abstand h" vom genannten Boden F" des genannten zweiten Behälters (V2) angehoben ist;
g. Schütteln des vorbemehlten oder vorpanierten Lebensmittels aus dem vorherigen Schritt, sodass das überschüssige Mehl oder Paniermehl durch das Sieb (3) in den Boden F" des genannten zweiten Behälters (V2) fällt;
h. Trennen des bemehlten oder panierten Lebensmittels und Rückführen des am Boden F" des genannten zweiten Behälters (V2) angesammelten überschüssigen Mehls oder Paniermehls.

10. Verfahren nach Anspruch 9, wobei der genannte erste Behälter (V1) von einem dritten Behälter nach Anspruch 7 umschlossen ist, und Folgendes umfasst:
a. Einsetzen der aus dem genannten ersten Behälter und dritten Behältern bestehenden Einheit in den genannten zweiten Behälter (V2);
b. Anordnen des zu bemehlenden oder zu panierenden Lebensmittels in dem genannten dritten Behälter, der über dem genannten ersten Behälter (V1) positioniert ist;
c. Überschütten des zu bemehlenden oder zu panierenden Lebensmittels in dem genannten dritten Behälter mit Mehl oder Paniermehl in einer dem Volumen des zu bemehlenden oder zu panierenden Lebensmittels entsprechenden Menge;
d. manuelles Schütteln von Lebensmittel und Mehl unter Beibehaltung der Anordnung der genannten Einheit aus erstem Behälter und dritten Behältern in dem zweiten Behälter (V2);
e. Anheben und Drehen der genannten Einheit aus erstem Behälter und dritten Behältern, die das vorpanierte oder vorbemehlte Lebensmittel enthält, um 90°;
f. Anordnen der genannten Einheit aus erstem Behälter und dritten Behältern auf dem mit einer Erhöhung (8) versehenen genannten Rand (4) des genannten zweiten Behälters (V2), sodass der mit einem Sieb (3) versehene Boden F' um den Abstand h" vom Boden F" des genannten zweiten Behälters (V2) angehoben ist;
g. Vermischen des vorbemehlten oder vorpanierten Lebensmittels aus dem vorherigen Schritt in dem genannten dritten Behälter, wobei überschüssiges Mehl oder Paniermehl durch das Sieb des genannten dritten Behälters in den genannten ersten Behälter (V1) fällt;
h. Trennen des im genannten dritten Behälter befindlichen bemehlten oder panierten Lebensmittels;
i. Vermischen des in Schritt "g" in den genannten ersten Behälter (V1) gefallenen Mehls oder Paniermehls und Rückführen des überschüssigen Mehls oder Paniermehls, das sich durch das Sieb (3) des genannten ersten Behälters (V1) am Boden F' des genannten zweiten Behälters (V2) angesammelt hat, in einen neuen Mehlier- oder Panierprozess gemäß den vorherigen Schritten;
j. Entsorgen des nach Schritt "g" im genannten ersten Behälter (V1) verbliebenen Mehls oder Paniermehls.

11. Verfahren nach Anspruch 9, wobei in dem Fall, dass der Bediener das Hinzufügen einer weiteren Menge Mehl oder Paniermehl als erforderlich erachtet, dies jeweils nach Schritt d) durch ein- oder mehrmaliges Wiederholen der Schritte c) und d) erfolgen kann, bis eine optimale Bemehlung bzw. Panade erreicht ist.

12. Verfahren nach Anspruch 10, wobei in dem Fall, dass der Bediener das Hinzufügen einer weiteren Menge Mehl oder Paniermehl als erforderlich erachtet, dies jeweils nach Schritt i) durch ein- oder mehrmaliges Wiederholen der Schritte c) und d) erfolgen kann, bis eine optimale Bemehlung bzw. Panade erreicht ist.

13. Verfahren nach Anspruch 9, wobei in dem Fall, dass der Bediener am Ende des jeweiligen Schritts g) das Hinzufügen einer weiteren Menge Mehl oder Paniermehl als erforderlich erachtet, dies jeweils durch ein- oder mehrmaliges Wiederholen der Schritte c) bis g) erfolgen kann, bis eine optimale Bemehlung oder Panade erreicht ist, indem das im genannten zweiten Behälter (V2) angesammelte Mehl oder Paniermehl teilweise wiederverwendet wird.

14. Verfahren nach Anspruch 10, wobei in dem Fall, dass der Bediener am Ende des jeweiligen Schritts g) das Hinzufügen einer weiteren Menge Mehl oder Paniermehl als erforderlich erachtet, dies jeweils durch ein- oder mehrmaliges Wiederholen der Schritte c) bis g) erfolgen kann, bis eine optimale Bemehlung oder Panade erreicht ist, indem das im genannten zweiten Behälter (V2) angesammelte Mehl oder Paniermehl teilweise wiederverwendet wird.

15. Verfahren nach einem der Ansprüche 9, 11 oder 13, wobei das Mehl oder Paniermehl, das sich am Boden gegen die kurze Seite des genannten zweiten Behälters (V2) und des genannten ersten Behälters (V1) bzw. der genannten, aus erstem Behälter und dritten Behältern bestehenden Einheit angesammelt hat, in den Teil des genannten zweiten Behälters (V2) verbracht wird, der frei von Mehl oder Paniermehl ist, um es weiter zu verwenden.

16. Verfahren nach einem der Ansprüche 10, 12 oder 14, wobei das Mehl oder Paniermehl, das sich am Boden gegen die kurze Seite des genannten zweiten Behälters (V2) und der genannten, aus erstem Behälter (V1) und dritten Behältern bestehenden Einheit angesammelt hat, in den Teil des genannten zweiten Behälters (V2) verbracht wird, der frei von Mehl oder Paniermehl ist, um es weiter zu verwenden.

## Revendications

1. Système pour fariner ou paner des aliments comprenant au moins deux récipients, un premier récipient (V1) et un second récipient (V2) constitués chacun d'un fond quadrilatère (F') et (F"), ayant des périmètres (P') et (P") et des parois sur les quatre côtés de hauteur (h') et (h"), ledit fond ayant des dimensions telles que ledit premier récipient (V1) ayant le périmètre (P') est contenu dans ledit second récipient (V2) ayant le périmètre (P") et que ledit périmètre (P') dudit premier récipient (V1) est inférieur audit périmètre (P") dudit second récipient (V2), ledit second plus grand récipient (V2) ayant sur son côté de plus grande taille (a") un bord (4) avec une extension (8) placé sur le bord supérieur de hauteur (h") en porte-à-faux soit vers l'intérieur soit vers l'extérieur et ledit bord (4) forme une base pour la base d'un côté plus petit (b') dudit premier récipient (V1), ledit premier récipient (V1) a un fond constitué, au moins partiellement, d'un tamis (3) et ledit fond (F') de tamis (3) du premier récipient (V1) est en contact direct avec le fond (F") du second récipient (V2), ledit tamis (3) est de taille appropriée pour permettre, lors de l'utilisation, la séparation de l'excès de matière farineuse des aliments farinés ou panés par :
a. le placement dudit premier récipient (V1) à l'intérieur dudit second récipient (V2), par lequel ledit fond (F') dudit premier récipient (V1) est en contact direct avec ledit fond (F") dudit second récipient (V2),
b. le placement des aliments devant être recouverts de farine ou de chapelure à l'intérieur dudit récipient (V1),
c. le versement de la farine ou de la chapelure sur les aliments devant être panés dans ledit premier récipient (V1) dans une quantité proportionnelle aux aliments devant être panés ou farinés ;
d. le mélange manuel des aliments et de la farine, tout en maintenant la configuration dudit premier récipient (V1) à l'intérieur dudit second récipient (V2) ;
e. le soulèvement et la rotation de 90° dudit premier récipient (V1) contenant les aliments pré-panés ou pré-farinés ;
f. le positionnement dudit premier récipient (V1) sur ledit bord (4) pourvu de ladite extension (8) dudit second récipient V2 de sorte que le fond F' dudit premier récipient (V1) pourvu dudit tamis (3) soit soulevé d'une distance h" du fond F" dudit second récipient (V2),
g. le mélange des aliments pré-farinés ou pré-panés de l'étape précédente, l'excès de farine ou de chapelure tombant à travers ledit tamis (3) sur le fond F" dudit second récipient (V2) ;
h. la séparation des aliments farinés ou panés et la recirculation de l'excès de farine ou de chapelure collectée sur le fond F" dudit second récipient (V2).

2. Système selon la revendication 1, dans lequel lesdits fonds quadrilatères possèdent :
a. une forme rectangulaire avec les tailles a' et b' des côtés dudit premier récipient (V1) de périmètre P' et avec les tailles a" et b" des côtés dudit second récipient (V2) de périmètre P",
b. les tailles desdits côtés sont telles que a' < a" et b' < b", et
c. les rapports a'/a" et b'/b" sont compris entre 90 et 50% ;

3. Système selon la revendication 2, dans lequel les tailles dudit côté a' sont comprises entre 220 et 280 mm et les tailles dudit côté b' sont comprises entre 290 et 400 mm.

4. Système selon les revendications 2 et 3, dans lequel les parois sur les quatre côtés sont de hauteur h" > h' et le tamis (3) placé sur le fond F' dudit premier récipient (V1) recouvre la surface du fond F' de 95% à 100%.

5. Système selon l'une quelconque des revendications précédentes, dans lequel ledit bord (4) avec une extension (8) placé sur ledit bord supérieur de hauteur h" sur le côté plus grand a" dudit second récipient (V2) de plus grande taille est en porte-à-faux de taille S soit vers l'intérieur soit vers l'extérieur et forme la base de la base dudit premier récipient (V1) sur son côté de plus petite taille b' et ladite extension (8) est externe par rapport au bord.

6. Système selon la revendication 5, dans lequel le surplomb dudit bord (4) de taille S dudit second récipient (V2) est extérieur et la taille du plus grand des côtés dudit premier récipient (V1) a' est telle que b' < a' < (b" +2S) ; de préférence le système est pourvu d'un couvercle fermant ledit second récipient (V2) de taille comprise entre les surplombs sur les plus grands côtés a" et de largeur c' telle que b" < c' < (b"+2S) et longueur c" = a".

7. Système selon l'une quelconque des revendications précédentes, dans lequel ledit premier récipient (V1) est recouvert d'un troisième récipient de taille similaire, ledit troisième récipient étant intégré dans la bordure supérieure dudit premier récipient (V1) et ayant un fond comprenant un tamis de taille 30 % supérieure à la taille du tamis dudit premier récipient (V1).

8. Système selon la revendication 7, dans lequel la taille dudit tamis dudit troisième récipient est comprise entre 60 et 120 % de la taille du tamis dudit premier récipient (V1).

9. Procédé de farinage ou panure d'un aliment par l'utilisation d'un système revendiqué selon l'une quelconque des revendications 1 à 4, comprenant :
a. le placement d'un premier récipient (V1) à l'intérieur d'un second récipient V2, par lequel ledit fond (F') dudit premier récipient (V1) est en contact direct avec ledit fond (F") dudit second récipient (V2) ;
b. le placement des aliments devant être recouverts de farine ou de chapelure à l'intérieur dudit premier récipient (V1) ;
c. le versement de la farine ou de la chapelure sur les aliments devant être panés à l'intérieur dudit premier récipient (V1) dans une quantité proportionnelle aux aliments devant être panés ou recouverts ;
d. le mélange manuel des aliments et de la farine, tout en maintenant la configuration dudit premier récipient (V1) à l'intérieur dudit second récipient (V2) ;
e. le soulèvement et la rotation de 90° dudit premier récipient (V1) contenant les aliments pré-panés ou pré-farinés ;
f. le positionnement dudit récipient (V1) sur le bord (4) pourvu d'une extension (8) dudit second récipient (V2) de sorte que ledit fond F' dudit premier récipient (V1) pourvu d'un tamis (3) soit soulevé d'une distance h" dudit fond F" dudit second récipient (V2) ;
g. le mélange des aliments pré-farinés ou pré-panés de l'étape précédente, l'excès de farine ou de chapelure tombant à travers le tamis (3) sur le fond F" dudit second récipient (V2) ;
h. la séparation des aliments recouverts de farine ou panés et la recirculation de l'excès de farine ou de chapelure collectée au fond F" dudit second récipient (V2).

10. Procédé selon la revendication 9, dans lequel ledit premier récipient (V1) est recouvert d'un troisième récipient selon la revendication 7, et comprenant :
a. le placement de l'ensemble desdits premier et troisième récipients à l'intérieur dudit second récipient (V2),
b. la disposition des aliments devant être farinés ou panés à l'intérieur dudit troisième récipient placé au-dessus dudit premier récipient (V1),
c. le versement de la farine ou de la chapelure sur les aliments devant être recouverts à l'intérieur dudit troisième récipient dans une quantité proportionnelle aux aliments devant être farinés ou panés ;
d. le mélange manuel des aliments et de la farine, tout en maintenant la configuration dudit ensemble de premier et troisième récipients à l'intérieur du second récipient (V2) ;
e. le soulèvement et la rotation de 90° dudit ensemble de premier et troisième récipients contenant les aliments pré-panés ou pré-farinés ;
f. le positionnement dudit ensemble de premier et troisième récipients sur ledit bord (4) pourvu d'une extension (8) dudit second récipient (V2) de sorte que le fond F' pourvu d'un tamis (3) soit soulevé d'une distance h" du fond F" dudit second récipient (V2),
g. le mélange dans ledit troisième récipient des aliments pré-farinés ou pré-panés de l'étape précédente, l'excès de farine ou de chapelure tombant à travers le tamis dudit troisième récipient dans ledit premier récipient (V1) ;
h. la séparation des produits alimentaires farinés ou panés placés à l'intérieur dudit troisième récipient ;
i. le mélange de la farine ou de la chapelure qui est tombée à l'étape «g« à l'intérieur dudit premier récipient (V1), et la recirculation de l'excès de farine ou de chapelure collectée au fond F' dudit second récipient (V2) à travers le tamis (3) dudit premier récipient (V1) vers un nouveau procédé de farinage et panure selon les étapes précédentes ;
j. l'élimination de toute farine ou chapelure restante dans ledit premier récipient (V1) après l'étape « g ».

11. Procédé selon la revendication 9, dans lequel, au cas où l'opérateur estime qu'une quantité supplémentaire de farine ou de chapelure doit être ajoutée, cela peut se faire après l'étape d.) en répétant les étapes c) et d), respectivement, une ou plusieurs fois jusqu'à l'obtention d'un farinage ou d'une panure optimale.

12. Procédé selon la revendication 10, dans lequel, au cas où l'opérateur estime qu'une quantité supplémentaire de farine ou de chapelure doit être ajoutée, cela peut se faire après l'étape i.) en répétant les étapes c.) et d.), respectivement, une ou plusieurs fois jusqu'à l'obtention d'un farinage ou d'une panure optimale.

13. Procédé selon la revendication 9, dans lequel, au cas où l'opérateur estime que, à la fin de l'étape g), respectivement, une quantité supplémentaire de farine ou de chapelure doit être ajoutée, cela peut se faire en répétant les étapes c) à g), respectivement, une ou plusieurs fois jusqu'à l'obtention d'un farinage ou d'une panure optimale en récupérant partiellement la farine ou la chapelure collectée sur ledit second récipient (V2).

14. Procédé selon la revendication 10, dans lequel, au cas où l'opérateur estime que, à la fin de l'étape g), respectivement, une quantité supplémentaire de farine ou de chapelure doit être ajoutée, cela peut se faire en répétant les étapes c) à g), respectivement, une ou plusieurs fois jusqu'à l'obtention d'un farinage ou d'une panure optimale en récupérant partiellement la farine ou la chapelure collectée sur ledit second récipient (V2).

15. Procédé selon l'une quelconque des revendications 9, 11, ou 13, dans lequel la farine ou la chapelure collectée au fond, contre le côté court dudit second récipient (V2) et dudit premier récipient (V1), ou dudit ensemble de premier et troisième récipients, est déplacée vers la partie dudit second récipient (V2) laissée sans farine ou chapelure pour une autre utilisation.

16. Procédé selon l'une quelconque des revendications 10, 12, ou 14, dans lequel la farine ou la chapelure collectée au fond, contre le côté court dudit second récipient (V2) et dudit ensemble de premier (V1) et troisième récipients, est déplacée vers la partie dudit second récipient (V2) laissée sans farine ou chapelure pour une autre utilisation.
